# EUROPEAN PATENT APPLICATION

(11) **EP 1 273 627 A1**
(43) Date of publication of application: **08.01.2003**
(21) Application number: 01956816.1
(22) Date of filing: 08.08.2001
(51) Int. Cl.: C08L 67/00, C08J 5/00

(54) **RECYCLED POLYESTER RESIN COMPOSITION AND MOLDED ARTICLES THEREOF**

(30) Priority: 09.08.2000 JP 2000240860
(71) Applicant: DAICEL CHEMICAL INDUSTRIES, Ltd., Sakai-shi, Osaka 590-0905 (JP)
(72) Inventor: FUJITA, Kazutoshi, Yokohama-shi Kanagawa 227-0066 (JP)
(74) Representative: Portal, Gérard
(86) International application number: JP0106823
(87) International publication number: WO02012394

(57) **Abstract**

The present invention is drawn to a recycled-polyester resin composition containing 100 parts by weight of a recycled polyester resin (A), 0.5 to 20 parts by weight of a lactone polymer (B), 0.5 to 30 parts by weight of an epoxidized diene-based block copolymer (C) and, optionally, 0.5 to 30 parts by weight of a polyolefin resin (D); and an article molded from the composition. The composition exhibits improved formability in terms of, for example, injection molding and extrusion molding, and the molded article has excellent mechanical strength.

## Description

### Technical Field

The present invention relates to a resin composition containing a recycled polyester resin (hereinafter referred to as a "recycled-polyester resin composition") which exhibits improved moldability in terms of, for example, injection molding and extrusion molding, and has excellent mechanical strength; and to an article molded from the resin composition.

### Background Art

Polyester resins are widely used, by virtue of their light weight, high strength, and excellent water resistance, chemical resistance, an electrical insulating property, and moldability. Particularly, a polyethylene terephthalate (generally abbreviated as "PET") is mass-produced as a raw material for beverage bottles, by virtue of its light weight, high strength, and excellent transparency. Recently, in Japan, the Containers and Packaging Recycling Law has been enacted, and accordingly plastics have been recycled. Furthermore, in view of a global trend, recycling of PET bottles has become desirable.

However, a recycled PET material exhibits poor moldability, and it is difficult to form the material into molded articles by means of injection molding, which is a typical technique employed for forming general-purpose resins, such as polyolefin resins, into molded articles. Therefore, a limitation is imposed on application of the recycled PET material, and utilization of the PET material is not necessarily sufficient.

The recycled PET material, which is obtained through pulverization of recovered beverage bottles, fibers, and films, typically assumes a shapeless state or a flake-like form. Therefore, such the PET material is voluminous, resulting in poor transportation efficiency. Accordingly, in consideration of transportation efficiency, the recycled PET material desirably assumes a pellet-like form. However, since the recycled PET material exhibits poor moldability, molding of the material into uniform pellets is difficult.

An object of the present invention is to provide a recycled-polyester resin composition which exhibits improved moldability in terms of, for example, injection molding and extrusion, and which has excellent mechanical strength; as well as a molded article therefrom.

### Disclosure of the Invention

The present inventors have found that, when a recycled polyester material is mixed with specific amounts of a lactone polymer and an epoxidized diene-based block copolymer, or when a recycled polyester material is mixed with specific amounts of a lactone polymer, an epoxidized diene-based block copolymer, and a polyolefin resin, the aforementioned problems can be solved effectively. The present invention has been accomplished on the basis of this finding.

Accordingly, a first aspect of the present invention provides a recycled-polyester resin composition comprising 100 parts by weight of a recycled polyester resin (A), 0.5 to 20 parts by weight of a lactone polymer (B), and 0.5 to 30 parts by weight of an epoxidized diene-based block copolymer (C) .

A second aspect of the present invention provides a recycled-polyester resin composition comprising 100 parts by weight of a recycled polyester resin (A), 0.5 to 20 parts by weight of a lactone polymer (B), 0.5 to 30 parts by weight of an epoxidized diene-based block copolymer (C), and 0.5 to 30 parts by weight of a polyolefin resin (D).

Further, a third aspect of the present invention provides a recycled-polyester resin composition comprising a recycled polyester resin (A), and a masterbatch containing a lactone polymer (B) and an epoxidized diene-based block copolymer (C).

A fourth aspect of the present invention provides a recycled-polyester resin composition comprising a recycled polyester resin (A), and a masterbatch containing lactone polymer (B), an epoxidized diene-based block copolymer (C), and a polyolefin resin (D).

A fifth aspect of the present invention provides a recycled-polyester resin composition according to any one of the first through fourth aspects of the present invention, wherein the recycled polyester resin (A) is a recycled PET resin.

A sixth aspect of the present invention provides a recycled-polyester resin composition according to any one of the first through fifth aspects of the present inventions, wherein the epoxidized diene-based block copolymer (C) is obtained through epoxidation of a block copolymer or a partially hydrogenated product thereof, the block copolymer including a block of a vinyl aromatic compound and a block of a conjugated diene compound.

A seventh aspect of the present invention provides a recycled-polyester resin composition according to any one of the first through sixth aspects of the present inventions, wherein the polyolefin resin (D) is a polypropylene resin.

An eighth aspect of the present invention provides a molded article from a recycled-polyester resin composition as recited in any one of the first through seventh aspects of the present inventions.

A ninth aspect of the present invention provides a molded article from a virgin polyester resin and a recycled-polyester resin composition as recited in any one of the first through seventh aspects of the present inventions.

A tenth aspect of the present invention provides a molded article according to the ninth invention, wherein the weight ratio of the virgin polyester resin to the recycled-polyester resin composition falls within the range of 90:10 to 0:100.

### Best Mode for Carrying Out the Invention

Hereinafter, the recycled-polyester resin composition of the present invention will next be described in detail.

### (Recycled polyester resin)

As used herein, the term "polyester resin" refers to a polyester having a structure obtained through polycondensation of a dicarboxylic acid compound with a dihydroxy compound, polycondensation of a hydroxy-carboxylic acid compound, or polycondensation of the above three compounds, etc. The polyester resin may be any one of a homo-polyester or a co-polyester.

Examples of the dicarboxylic acid compound constituting the polyester resin employed herein include publicly known dicarboxylic acids such as terephthalic acid, isophthalic acid, 2,6-naphthalenedicarboxylic acid, diphenyldicarboxylic acid, diphenyl ether dicarboxylic acid, diphenylethanedicarboxylic acid, cyclohexanedicarboxylic acid, adipic acid, and sebacic acid; and alkyl-, alkoxy-, or halogen-substituted products thereof. When the dicarboxylic acid compound is employed for polymerization, the compound may assume the form of an ester-formable derivative; for example, an ester such as a dimethyl ester obtained from the compound and a lower alcohol.

Examples of the dihydroxy compound constituting the polyester resin employed in the present invention include dihydroxy compounds such as ethylene glycol, 1,3-propanediol, propylene glycol, butanediol, neopentyl glycol, hydroquinone, resorcin, dihydroxyphenyl, 2,6-naphthalenediol, dihydroxydiphenyl ether, cyclohexanediol, 2,2-bis(4-hydroxyphenyl)propane, and diethoxidized bisphenol A; oligooxy C₁-C₆ alkylene glycols; and alkyl-, alkoxy-, or halogen-substituted products thereof, etc., which may be used solely or in combination of two or more species.

Examples of the hydroxy-carboxylic acid compound include oxy-carboxylic acids such as 4-hydroxybenzoic acid, 2,6-hydroxynaphthoic acid, and diphenylenehydroxycarboxylic acid; and alkyl-, alkoxy-, or halogen-substituted products thereof.

The hydroxy-carboxylic acid compound may assume the form of an ester-formable derivative. The aforementioned compounds may be used solely or in combination of two or more species.

Further, in the present invention, the polyester resin encompasses branched or cross-linked polyesters containing a small amount of a tri-functional monomer such as trimellitic acid, trimesic acid, pyromellitic acid, pentaerythritol, or trimethylolpropane, etc.

Still further, in the present invention, the polyester resin may be modified by means of a publicly known technique, such as cross-linking or graft polymerization, etc.

In the present invention, the polyester resin encompasses polyester resins produced through polycondensation of the aforementioned compounds serving as monomer components, and a mixture of two or more of the resultant polyester resins. Of the polyester resins, PET is preferred.

PET is an abbreviated name of polyethylene terephthalate, and it is typically produced as follows. Terephthalic acid or an ester-formable derivative thereof (e.g., a lower alkyl ester such as a dimethyl ester, or a monomethyl ester) and ethylene glycol or an ester-formable derivative thereof (e.g., ethylene glycol diacetate), serving as raw materials, are heated in the presence of a catalyst, to thereby allow reaction to proceed, and subsequently, the resultant glycol terephthalate is polymerized in the presence of a catalyst so as to attain a predetermined degree of polymerization.

In the present invention, the term "recycled polyester resin" refers to a material obtained by collecting a used article molded from the aforementioned polyester resin, such as a beverage bottle, a fiber, a film, or a large size molded article such as container and, optionally, subjecting the collected product to any desired treatment, such as washing, pulverization, or classification. The recycled polyester resin is also called a "recycled material" or a "recycled resin."

No particular limitation is imposed on the polyester-resin-made products that can be recycled, and specific examples include beverage bottles, fibers, films, and other molded articles. In addition to such the molded articles which have been used in practice, film chips, gate and runner portions of injection-molded articles, molded articles which have not passed, etc., which are obtained during production of final products, may be also employed as recycled materials.

### (Lactone polymer)

The lactone polymer (B) employed in the present invention is preferably a polymer having a structure obtained through ring-opening-polymerization of a C₄-C₁₁ lactone. Preferred examples of the C₄-C₁₁ lactone include a poly-ε-caprolactone. Further, a copolymer prepared from a comonomer other than ε-caprolactone, such as valerolactone, glycollide, or lactide, may also be employed as the lactone polymer. In addition to the aforementioned lactone polymer, a polycaprolactone having blocked end groups (hereinafter, simply referred to as an "end-blocked polycaprolactone") may be employed.

No particular limitation is imposed on the method for producing the lactone polymer (B) employed in the present invention. The lactone polymer may be produced through, for example, the following procedure: a polymerization initiator is added to a lactone monomer; preferably, a polymerization catalyst is added to the resultant mixture; and the resultant mixture is allowed to react at 120 to 230°C, and preferably at 140 to 220°C for several hours while being stirred.

The polymerization initiator is water or a compound having a hydroxyl end group. Examples of the compound having a hydroxyl end group include mono-valent alcohols such as n-hexyl alcohol, n-heptyl alcohol, n-octyl alcohol, n-nonyl alcohol, lauryl alcohol, and myristyl alcohol; glycols such as ethylene glycol, 1,3-propanediol, propylene glycol, ethylethylene glycol (i.e., α-butylene glycol), tetramethylene glycol, 2-methyl-1,2-propanediol, pinacol, β-butylene glycol, diethylene glycol, neopentyl glycol, and 1,4-cyclohexanedimethanol; tri-valent alcohols such as glycerin, 1,2,3-butanetriol, 1,2,3-pentanetriol, trimethylolethane, and trimethylolpropane; tetra-valent alcohols such as erythritol and pentaerythritol; aromatic alcohols such as phenol, bisphenol-A, 2,4,6-tribromophenol, and tetrabromobisphenol-A; monocarboxylic acids such as benzoic acid, p-methylbenzoic acid, 2,3,4-tribromobenzoic acid, pentabromobenzoic acid, lauric acid, and myristic acid; dicarboxylic acids such as phthalic acid, isophthalic acid, terephthalic acid, 2,6-naphthalenedicarboxylic acid, 4,4'-diphenoxyethanedicarboxylic acid, succinic acid, adipic acid, sebacic acid, azelaic acid, decadicarboxylic acid, cyclohexanedicarboxylic acid, tetrachlorophthalic acid, and tetrabromoterephthalic acid; tricarboxylic acids such as tricarballylic acid, trimellisic acid, and trimellitic acid; tetracarboxylic acids such as pyromellitic acid; and hydroxy-carboxylic acids such as ε-hydroxy-carboxylic acid and hydroxyethoxybenzoic acid.

Further, examples of the polymerization catalyst employed include various organic or inorganic metallic compounds, etc. Specific examples include tetrabutyl titanate, tetraisopropyl titanate, tetraethyl titanate, dibutyl tin oxide, dibutyl tin laurate, tin octylate, and stannous dichloride, etc. The amount of the catalyst to be employed is 0.1 to 1,000 ppm, and preferably 0.5 to 500 ppm, on the basis of starting materials.

The number average molecular weight of the lactone polymer (B) employed in the present invention is 1,000 to 500,000, preferably 5,000 to 200,000, and more preferably 10,000 to 100,000.

When the number average molecular weight of the lactone polymer (B) is less than 1,000, the polymer insufficiently exerts the effect of improving moldability of the recycled polyester resin, whereas when the number average molecular weight exceeds 500,000, melt-kneading of the polymer into the recycled polyester resin becomes difficult.

### (Epoxidized diene-based block copolymer)

Epoxidized diene-based block copolymer (C) employed in the present invention is obtained through epoxidation of a block copolymer or a partially hydrogenated product thereof, the block copolymer including a block of a vinyl aromatic compound and a block of a conjugated diene compound. The number average molecular weight of the block copolymer prior to epoxidation ranges in 5,000 to 1,000,000, and preferably 10,000 to 800,000. The molecular weight distribution [the ratio of the weight average molecular weight (Mw) to the number average molecular weight (Mn) (i.e., Mw/Mn)] is 10 or less. The molecular structure of the block copolymer may be any one of a linear chain structure, a branched structure, a radial structure, or an arbitrary combination of these structures. For example, the block copolymer is a copolymer formed of a vinyl aromatic compound (X) block and a conjugated diene compound (Y) block, and has a structure such as X-Y-X, Y-X-Y-X, (X-Y-)₄Si, or X-Y-X-Y-X. Unsaturated bonds of the conjugated diene compound constituting the diene-based block copolymer may be even partially hydrogenated.

Examples of the vinyl aromatic compound constituting the diene-based block copolymer include styrene, α-methylstyrene, vinyltoluene, p-tert-butylstyrene, divinylbenzene, p-methylstyrene, and 1,1-diphenylstyrene. These compounds may be used solely or in combination of two or more species. Of these compounds, styrene is preferred. Further, examples of the conjugated diene compound include, for example, butadiene, isoprene, 1,3-pentadiene, 2,3-dimethyl-1,3-butadiene, piperylene, 3-butyl-1,3-octadiene, and phenyl-1,3-butadiene. These compounds may be used solely or in combination of two or more species. Of these compounds, butadiene, isoprene, or a combination thereof is preferred.

The block copolymer employed in the present invention may be produced by means of any method, so long as the resultant copolymer has the aforementioned structure. For example, by means of a method disclosed in Japanese Patent Publication (*kokoku*) No. 40-23798, 43-17979, 46-32415, or 56-28925, a vinyl aromatic compound-conjugated diene compound block copolymer can be synthesized in an inert solvent in the presence of, for example, a lithium catalyst, etc. Furthermore, by means of a method disclosed in Japanese Patent Publication (*kokoku*) No. 42-8704 or 43-6636, or in Japanese Patent Application Laid-Open (*kokai*) No. 59-133203, the above block copolymer can be hydrogenated in an inert solvent in the presence of a hydrogenation catalyst, to thereby synthesize a partially hydrogenated block copolymer employed in the present invention.

The epoxidized dien-based block copolymer employed in the present invention can be obtained by reacting, in an inert solvent, the aforementioned block copolymer with an epoxidation agent such as a hydroperoxide or a peracid. Examples of the peracid include performic acid, peracetic acid, and perbenzoic acid. When the hydroperoxide is used in combination with another compound (e.g., a combination of hydrogen peroxide and a mixture of tungstic acid and sodium hydroxide, a combination of hydrogen peroxide and an organic acid, or a combination of tert-butyl hydroperoxide and molybdenum hexacarbonyl), a catalytic effect can be obtained.

No strict limitation is imposed on the amount of the epoxidation agent to be employed, and the optimal amount of the epoxidation agent is determined in accordance with variable factors, such as the type of an epoxidation agent, the desired epoxidation degree, and the type of a block copolymer.

Separation of the resultant epoxidized diene-based block copolymer is carried out by means of an appropriate method; for example, a method in which the copolymer is precipitated in a poor solvent, a method in which the copolymer is added to hot water with stirring and the solvent is removed through evaporation, or a method in which the solvent is removed directly from the copolymer.

The epoxy equivalent of the thus-obtained epoxidized diene-based block copolymer preferably falls within a range of 320 to 8,000.

### (Polyolefin resin)

Examples of the polyolefin resin (D) employed in the present invention include olefin polymers such as polyethylene, polypropylene, poly-1-butene, and poly-1-pentene and a mixture thereof; copolymers of ethylene, propylene, 1-butene, and 1-pentene and a mixture thereof; polyolefin-based elastomers such as an ethylene-propylene rubber (EPM, EPR) and an ethylene-propylene-diene ternary copolymer (EPDM, EPD, EPT) and a mixture thereof; a mixture of polyolefin-based elastomers with olefin polymers such as a polyethylene, a polypropylene, and an ethylene-propylene copolymer; copolymers of olefin with a vinyl monomer primarily containing an olefin; and a mixture of two or more of the above species.

### (Formulation of components)

The recycled-polyester resin composition of the present invention contains 100 parts by weight of the recycled polyester resin (A), 0.5 to 20 parts by weight, preferably 3 to 10 parts by weight) of the lactone polymer (B), and 0.5 to 30 parts by weight, preferably 3 to 15 parts by weight of the epoxidized diene-based block copolymer (C).

The recycled-polyester resin composition of the present invention contains 100 parts by weight of the recycled polyester resin (A), 0.5 to 20 parts by weight of the lactone polymer (B), 0.5 to 30 parts by weight of the epoxidized diene-based block copolymer (C), and 0.5 to 30 parts by weight, preferably 3 to 15 parts by weight of the polyolefin resin (D).

When the amount of the lactone polymer (B) is less than 0.5 part by weight on the basis of 100 parts by weight of the recycled polyester resin (A), the lactone polymer fails to exert the effect of improving moldability of the polyester resin, whereas when the amount of the lactone polymer (B) exceeds 20 parts by weight, the strength of the recycled-polyester resin composition is disadvantageously lowered.

When the amount of the epoxidized diene-based block copolymer (C) is less than 0.5 part by weight, the strength of the resin composition becomes insufficient, whereas when the amount of the block copolymer exceeds 30 parts by weight, kneadability and moldability of the resin composition are impaired.

When the amount of the polyolefin resin (D) is less than 0.5 part by weight, advantages in cost are not satisfactory, whereas when the amount of the polyolefin resin exceeds 30 parts by weight, kneadability and moldability of the resin composition are impaired.

The composition of the present invention may contain additional additives, such as inorganic compounds, organic compounds, and additives for resins.

Examples of the additives for resins include stabilizers, coloring agents, weather-resistant agents (UV absorbers), lubricants, anti-static agents, extenders, and other additives.

### (Production method of the recycled-polyester resin composition and a molding method)

The recycled-polyester resin composition of the present invention is usually produced by means of a publicly known method. Examples of the method include a method in which the recycled polyester resin (A), the lactone polymer (B), the epoxidized diene-based block copolymer (C), the polyolefin resin (D), and a resin additive (polyolefin resin (D) and the additive for resins are optional) are melted and kneaded in an extruder, a kneader, a roll, or a banbury mixer; and a method in which particles of the above components are uniformly mixed together by mechanical means, and the resultant mixture is formed into a product by use of an injection molding machine while being mixed in the machine.

In the present invention, the lactone polymer (B), the epoxidized diene-based block copolymer (C), and the polyolefin resin (D) which is optional may be mixed together in advance to thereby prepare a masterbatch, and the resultant masterbatch is added to the recycled polyester resin (A). The proportions of the components in the masterbatch are as follows: 0.5 to 20 parts by weight of the lactone polymer (B), 0.5 to 30 parts by weight of an epoxidized diene-based block copolymer (C), and 0.5 to 30 parts by weight of the polyolefin resin (D). The masterbatch may even contain the aforementioned additive for resins.

The recycled-polyester resin composition obtained as described above can be formed into a product by means of, for example, extrusion molding, injection molding, or compression molding. The resultant product exhibits excellent mechanical strength, heat resistance, and an electrical insulating property.

### (Application of the recycled-polyester resin composition)

According to the present invention, pellets or products can be formed from the above-obtained recycled-polyester resin composition with no other components. However, a virgin polyester resin may be added to the recycled-polyester resin composition, after which pellets or products are formed from the resultant composition. When a virgin polyester resin is added to the recycled-polyester resin composition, the ratio by weight of the virgin polyester resin to the recycled-polyester resin composition falls within the range of 90:10 to 0:100, preferably within the range of 50:50 to 0:100. When the ratio by weight of the recycled-polyester resin composition is excessively below the above range, advantages of incorporation of the virgin polyester resin are not satisfactory.

The recycled-polyester resin composition of the present invention can be used as various products, which are currently molded from conventional thermoplastic resins. Examples of useful applications include electric appliance products, specifically, refrigerator housings, washing machine capacitor housings, TV packing covers, TV speaker boxes, TV deflection yokes, outlets and sockets, Christmas light sockets, CRT monitor bodies, air conditioner slats, air conditioner wind direction plates, air conditioner covers, humidifier covers, microwave oven doors, Washlet seats and hot water tanks, electric fan motor covers and control panels, connectors, PPC toner containers, and ventilating fan covers; civil engineering and building materials, specifically, troughs, electricity cable covers to be buried underground, pipe covers, monofilament and lamination films for a flat yarn, stadium seats and seatback covers, ornamental plant pots, OA floors, PP bands, various connectors, pallets, containers, and trays; and automobile materials, specifically, wire corrugated tubes, floor mats, door trim, trunk room sheet or lining, battery cases, radiator cooling fans, falling-object-prevention plates mounted in an engine space, instrument panels, interior trim, glove boxes, console boxes, fan shrouds, air cleaner housings, seat frames, connectors, and ashtrays.

### Examples

Hereinafter, the present invention will next be described in more detail by way of Examples, which should not be construed as limiting the invention thereto. In Examples and Comparative Examples, an Izod impact strength test was performed according to ASTM D256 at 23°C on a notched test piece (thickness: 3.2 mm).

### [Examples 1 through 15]

A recycled polyester resin (PET, a product of Taisei Plastics Co., Ltd.), a lactone polymer (PLACCELH7 [a poly-ε-caprolactone, a number average molecular weight: 70,000], product of Daicel Chemical Industries, Ltd.), an epoxidized diene-based block copolymer (A1020 [an epoxidized styrene-butadiene-styrene block copolymer], epoxy equivalent: 500, product of Daicel Chemical Industries, Ltd.), and a polyolefin resin (AZ564 [polypropylene resin], a product of Sumitomo Chemical Industries, Co., Ltd.) were mixed together by use of a tumbler (formulations of these components are shown in Tables 1 through 3). Subsequently, the resultant mixture was melted and kneaded at 255°C by use of a twin-screw extruder (model: TEM35B, product of Toshiba Corporation), to thereby obtain pellets. The thus-obtained pellets were formed into a test piece by use of an injection molding machine (model: IS100P, product of Toshiba Corporation) under the following conditions: molding temperature: 255°C, mold temperature: 25°C. The resultant test piece was subjected to measurement of Izod impact strength. The melt flow rate (MFR) of the pellets was measured at 270°C × 2.16 kg. The results are shown in Tables 1 through 3.

**Table 1**

| Example | 1 | 2 | 3 | 4 | 5 | 6 |
|---|---|---|---|---|---|---|
| Formulation | | | | | | |
| (parts by weight) | | | | | | |
| Recycled PET | 80 | 80 | 80 | 80 | 80 | 80 |
| PLACCCEL H7 | 2 | 4 | 5 | 6 | 7 | 8 |
| A1020 | 8 | 6 | 5 | 4 | 3 | 2 |
| AZ564 | 10 | 10 | 10 | 10 | 10 | 10 |
| Physical properties | | | | | | |
| Izod impact strength | | | | | | |
| (kgf·cm/cm²) | 8.0 | 10.4 | 7.9 | 7.6 | 6.7 | 6.4 |
| MFR (g/10 min) | 41.7 | 50.3 | 51.9 | 60.8 | 65.2 | 62.0 |

**Table 2**

| Example | 7 | 8 | 9 | 10 | 11 | 12 |
|---|---|---|---|---|---|---|
| Formulation | | | | | | |
| (parts by weight) | | | | | | |
| Recycled PET | 90 | 90 | 90 | 90 | 90 | 90 |
| PLACCCEL H7 | 1 | 2 | 2.5 | 3 | 3.5 | 4 |
| A1020 | 4 | 3 | 2.5 | 2 | 1.5 | 1 |
| AZ564 | 5 | 5 | 5 | 5 | 5 | 5 |
| Physical properties | | | | | | |
| Izod impact strength | | | | | | |
| (kgf·cm/cm²) | 6.5 | 6.4 | 6.7 | 6.7 | 6.9 | 5.9 |
| MFR (g/10 min) | 55.1 | 59.7 | 64.9 | 62.8 | 80.1 | 78.2 |

**Table 3**

| Example | 13 | 14 | 15 |
|---|---|---|---|
| Formulation | | | |
| (parts by weight) | | | |
| Recycled PET | 80 | 90 | 80 |
| PLACCCEL H7 | 10 | 3 | 4 |
| A1020 | 10 | 7 | 16 |
| AZ564 | 0 | 0 | 0 |
| Physical properties | | | |
| Izod impact strength | 7.1 | 6.7 | 7.8 |
| (kgf·cm/cm²) | | | |
| MFR (g/10 min) | 48.5 | 75.2 | 43.2 |

### [Comparative Examples 1 through 7]

A recycled polyester resin (PET, a product of Taisei Plastics Co., Ltd.), a lactone polymer (PLACCELH7 [a poly-ε-caprolactone, a number average molecular weight: 70,000], product of Daicel Chemical Industries, Ltd.), an epoxidized diene-based block copolymer (A1020 [an epoxidized styrene-butadiene-styrene block copolymer], a product of Daicel Chemical Industries, Ltd.), and a partially hydrogenated styrene-butadiene-styrene block copolymer (Toughtec, Asahi Chemical Industry Co., Ltd.) were mixed together by use of a tumbler (formulations of these components are shown in Table 4). Subsequently, the resultant mixture was melted and kneaded at 255°C by use of a twin-screw extruder (model: TEM35B, a product of Toshiba Corporation), to thereby obtain pellets. The thus-obtained pellets were molded into a test piece by use of an injection molding machine (model: IS100P, a product of Toshiba Corporation) under the following conditions: molding temperature: 255°C, mold temperature: 25°C. The resultant test piece was subjected to measurement of Izod impact strength. The melt flow rate of the pellets was measured at 270°C × 2.16 kg. The results are shown in Table 4.

In Comparative Example 1, MFR could not be measured. In Comparative Example 2, satisfactory impact strength could not be obtained.

In Comparative Example 3, polymer strands were not reliably obtained from the twin-screw extruder, resulting in difficult pelletization.

In Comparative Example 4, although pelletization could be performed, short shot occurred during injection molding; i.e., moldability of the pellets was poor. Poor moldability is thought to be attributed to a low melt flow rate.

In Comparative Examples 5 through 7, although pelletization could be performed, moldability of the pellets was poor. In Comparative Example 6, releasability of the test piece was poor.

**Table 4**

| Comparative Example | 1 | 2 | 3 | 4 | 5 | 6 | 7 |
|---|---|---|---|---|---|---|---|
| Formulation | | | | | | | |
| (parts by weight) | | | | | | | |
| Recycled PET | 100 | 90 | 90 | 90 | 90 | 90 | 90 |
| PLACCCEL H7 | - | 10 | - | - | 0.4 | 10 | 40 |
| A1020 | - | - | - | 10 | 10 | 40 | 10 |
| Toughtec | - | - | 10 | - | - | - | - |
| Physical properties | | | | | | | |
| Izod impact strength | | | | | | | |
| (kgf·cm/cm²) | 2.0 | 4.1 | - | 6.8 | 6.9 | 11.0 | 7.0 |
| MFR (g/10 min) | - | 90.7 | - | 52.3 | 50.0 | 35.0 | 90.1 |

As is apparent from Tables 1 through 4, the recycled-polyester resin composition of the present invention can be subjected to pelletization (granulation) and injection molding without raising any problems. Furthermore, articles molded through injection molding exhibit excellent impact resistance.

### Industrial Applicability

The recycled-polyester resin composition of the present invention can be subjected to granulation and injection molding, and an article molded from the composition has excellent mechanical strength.

## Claims

1. A recycled-polyester resin composition comprising 100 parts by weight of a recycled polyester resin (A), 0.5 to 20 parts by weight of a lactone polymer (B), 0.5 to 30 parts by weight of an epoxidized diene-based block copolymer (C).

2. A recycled-polyester resin composition comprising 100 parts by weight of a recycled polyester resin (A), 0.5 to 20 parts by weight of a lactone polymer (B), 0.5 to 30 parts by weight of an epoxidized diene-based block copolymer (C), and 0.5 to 30 parts by weight of a polyolefin resin (D).

3. A recycled-polyester resin composition comprising a recycled polyester resin (A), and a masterbatch containing a lactone polymer (B) and an epoxidized diene-based block copolymer (C).

4. A recycled-polyester resin composition comprising a recycled polyester resin (A), and a masterbatch containing a lactone polymer (B), an epoxidized diene-based block copolymer (C), and a polyolefin resin (D).

5. A recycled-polyester resin composition according to any one of claims 1 through 4, wherein the recycled polyester resin (A) is a recycled polyethylene terephthalate resin.

6. A recycled-polyester resin composition according to any one of claims 1 through 5, wherein the epoxidized diene-based block copolymer (C) is obtained through epoxidation of a block copolymer or a partially hydrogenated product thereof, the block copolymer including a block of a vinyl aromatic compound and a block of a conjugated diene compound.

7. A recycled-polyester resin composition according to any one of claims 1 through 6, wherein the polyolefin resin (D) is a polypropylene resin.

8. An article molded from a recycled-polyester resin composition as claimed in any one of claims 1 through 7.

9. An article molded from a virgin polyester resin and a recycled-polyester resin composition as claimed in any one of claims 1 through 7.

10. An article molded according to claim 9, wherein the ratio by weight of the virgin polyester resin and the recycled-polyester resin composition falls within the range of 90:10 to 0:100.
